# EUROPEAN PATENT APPLICATION

(11) **EP 1 215 845 A1**
(43) Date of publication of application: **19.06.2002**
(21) Application number: 00311169.7
(22) Date of filing: 14.12.2000
(51) Int. Cl.: H04L 12/24, H04L 12/28, H04L 29/06, H04Q 7/22

(54) **System and method for accessing an application server**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

An information handling system comprises text generation means for generation of an application server accession text comprising a server accession command for accessing an application server, transmission means for transmission of a text message to a receiving unit, the text message including the application server accession text, application server control means for preparing the application server such that it will respond to the server accession command in a predetermined manner.

By integrating the text messaging and server accession processes more effective operation is possible. Specifically, a text message can be used to alert a user to a requirement to access information on the server, and provides an efficient means of accessing the server.

The application server control means comprises data generation means for generating data for the use of the addressee of the text message, and storage means for storing said data at an address accessible by the server accession command.

## Description

This invention relates to mobile communications. In particular it relates to a method for providing information to users of a mobile communications network.

The provision of services such as telecommunications, electricity, gas, water, road maintenance, transport, the emergency services, and roadside repair services for vehicles, and repair of buildings, domestic appliances or the like, requires field staff to be deployed efficiently. For most applications, the deployment of the field staff has to be handled on a minute by minute basis. Examples of the processes needed to allocate such tasks efficiently can be found in the present applicant's "Work Manager" system, described in International Patent Applications WO 95/26535 and WO98/22897.

In order to deploy staff according to these allocations communication with staff out in the field is necessary. In the past most such operators used private mobile radio systems, and emergency services and transport providers often still do so, but for other services a public cellular radio system or a paging service is more commonly used. Cellular radio systems operating according to the "GSM" standard have a text messaging facility used as the "Short Message Service" (SMS) which can be used as a pager.

However, in order to carry out the task allocated to him, a field technician may need more data than can be provided using a simple voice or text message. For example, the technician may require route-finding information to get to the next task, customer account data, and technical data relating to the equipment he is to work on. He may also need access to timesheet applications to record the work he has done. If servicing a network he may need to operate diagnostic tests generated at a remote location to test the network. Many such technicians use portable computers to access the data they need. The data may be accessed from data carriers carried with the computer (hard discs, floppy discs, etc), but it is not possible to access real time information this way. Data may instead be accessed by way of a data connection such as the Internet. However, this requires access to a working communications connection. Access to the Internet through a modem and a cellular network can be very slow and power-hungry. Fixed connections are not always available, for example because the user is in a vehicle. In particular, a telecommunications technician who has been sent to repair a non-functioning connection cannot use it to obtain information to assist in that repair until the repair has been carried out.

It is inconvenient for a field technician to have to carry two devices, namely a mobile telephone or pager, and a portable computer with associated modem. Dual purpose devices are now coming onto the market which can be used as mobile telephones and also have the capability to access data networks such as the internet, using specially configured database sites which provide data in a form suitable for transmission over the cellular network (the "WAP" (Wireless Application Protocol) and GPRS (General Packet Radio Service) systems, for display on the small screens typical of mobile handsets. However, it is still necessary to enter a database address ("URL"), either by keying it in, a process prone to errors due to the complexity of such addresses and the small size of most such devices, or at least partially by navigation through links between Internet pages, which can be time consuming. Certain pieces of data e.g. customer account & telephone numbers are particularly prone to errors in keying.

The present invention provides a data handling system which makes use of such devices to integrate the paging, information access, diagnostic, and other functions required to support a field force.

According to the invention there is provided an information handling system comprising
text generation means for generation of an application server accession text comprising a server accession command for accessing an application server
transmission means for transmission of a text message to a receiving unit, the text message including the application server accession text.

Application server control means may be provided for preparing the application server such that it will respond to the server accession command in a predetermined manner

The application server control means may comprise data generation means for generating data for the use of the addressee of the text message, and storage means for storing said data at an address accessible by the server accession command.

There may be provided an allocation processor having means to identify a requirement for a server accession to be made, means to select a receiving unit for making the server accession, and means to control the transmission means to transmit the text message containing the server accession command to the selected receiving unit. The allocation processor may be a task allocation system arranged to select a resource to perform a reported task for which a task-related accession command is generated.

The invention may be embodied in software running on a general-purpose computer. The server accession command may be an address in a computer network such as the "Internet".

According to a second aspect, there is provided a method of handling information comprising the steps of
generating an application server accession text comprising a server accession command for accessing an application server
transmitting a text message to a receiving unit, the text message including the application server accession text.

The method may comprise the further step of transmitting instructions to the application server, such that it will respond to the server accession command in a predetermined manner.

The method may also comprise the steps of identifying a requirement for a server accession to be made, selecting a receiving unit for making the server accession, and transmitting the text message containing the server accession command to the selected receiving unit. The method may be a task allocation process, wherein a resource is selected to perform a task, an accession command is generated for the said task, and the accession command is transmitted to the selected resource.

The server accession command may be an address in a computer network. The server accession command may provide access to previously stored data, or the data may be generated specifically for storage at the address accessible by the server accession command for use exclusively by the addressee of the text message. Alternatively the data may have been made available on a database provided for use by a larger group of users. If the application server is not for use by the general public, security procedures can be provided to ensure the server accession command can only be used by a limited user group. The server accession command may also provide access to an interactive system such as a route finding processor. The system may allow control of a distributed system to allow diagnostic tests of the system to be performed.

The invention also extends to a general-purpose computer programmed to perform the method of the invention, and to a data carrier containing computer code for loading into such a computer for the performance of the method. The data carrier may take any suitable form such as a card, disc, tape, or electromagnetic, optical or acoustic signal, and may embody the code in any machine-readable form.

An embodiment of the invention will now be described, by way of example, with reference to the figures in which
Figure 1 shows the various elements that co-operate to perform the invention
Figure 2 is an information flow diagram
Figure 3 illustrates displays illustrative of those generated by the invention

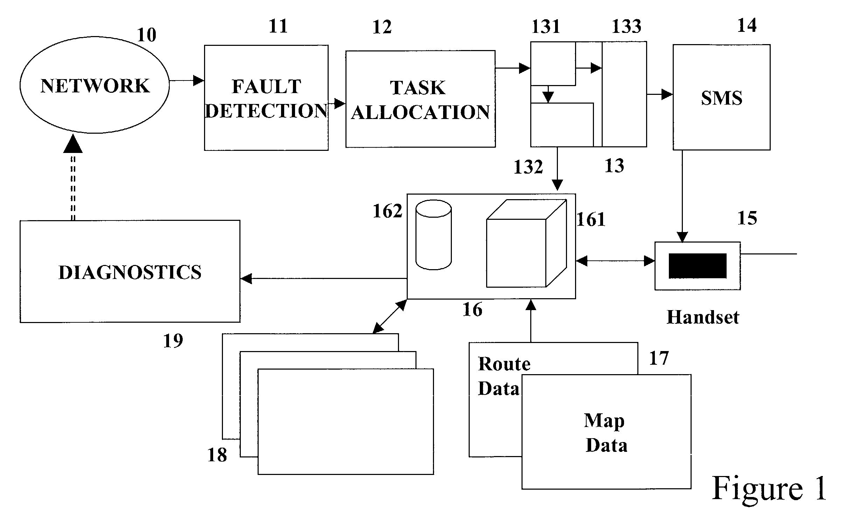

Figure 1 illustrates schematically the various intercommunicating devices that co-operate in this embodiment of the invention. In this example the tasks to be performed are maintenance of a distributed utility such as a telephone network or an electricity, gas, or water distribution network, generally indicated at "10". A fault detection means 11 is arranged to monitor the network 10 and transmit fault alarms to a task allocation system 12 when attention is required. The task allocation system 12 may, for example be the present applicant's "Work Manager" system, described in International Patent Applications WO 95/26535 and WO98/22897. The task management system 12 is arranged to allocate tasks to technical staff, and controls a data handling system 13. The data handling system comprises text generation means 131 for generation of an application server accession text, and transmission means 133 for transmission of a text message by way of a text messaging network 14 to a user handset 15. The application server accession text comprises an address by which the user handset 15 may access a specified application server 16 using a data network such as the "Internet". The task allocation system also has an application server control means 132 for generating an instruction to prepare the application server 16 such that it will respond to the server accession command in a predetermined manner.

The application server 16, here shown as operating according to the WAP protocol in order to be compatible with the handset 15, may be have data generation means 161 arranged to generate data for the use of the addressee 15 of the text message, either from the information provided from the data handling system 13 or from other databases 17, 18. It may also comprise storage means 162 for storing said data so that it is readily available when the server accession command is received from the user handset 15.

The data to be accessed from the databases 17,18 may be of any suitable form appropriate to the application. Thus for location finding, graphical map data may be used from a mapping database 17. For repair work, wiring diagrams or other graphical information may be provided. Photographic information may also be used, for example to assist the police when looking for a suspect or a missing person.

Remote diagnostic applications 19 may be operated from the mobile handset 15 through the server 16, for example to cause a telephone exchange to transmit a test signal to the location under investigation in the network 10, or to monitor for a test signal transmitted from the location under investigation. This removes the need to have a second human operator at the remote end to carry out such tests.

In this illustrative example a fault is detected in a major telephone exchange line, a technician is selected to rectify the fault, the technician is notified of the fault and provided with related information, including location information, the technician uses remote diagnostic facilities, and the technician reports completion of the task. This is all achieved using a WAP-enabled mobile telephone communicating with a database operated by or on behalf of the utility operator.

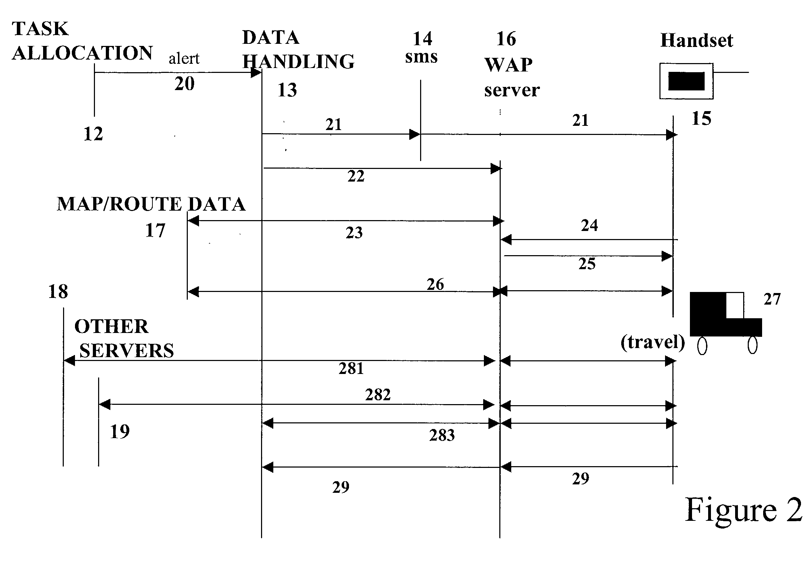

As shown in Figure 2, initially the fault is detected, either as a result of a customer reporting a service interruption or by an automatic monitoring system generating an alert (step 20). In this example the alert identifies a fault as having occurred in a specified cable in the network 10. The approximate location can be determined by remote testing carried out by the exchange itself - for example by testing for responses from transponders fitted at intermediate points in the cable or by determining whether any branches are unaffected (those which branch from the main cable at a point between the test location and the fault location). Other tests may be carried out which generate a response indicative of the physical length of wire between the test point and the fault, for example resistance of the wire, return time for a signal reflected at the fault location.

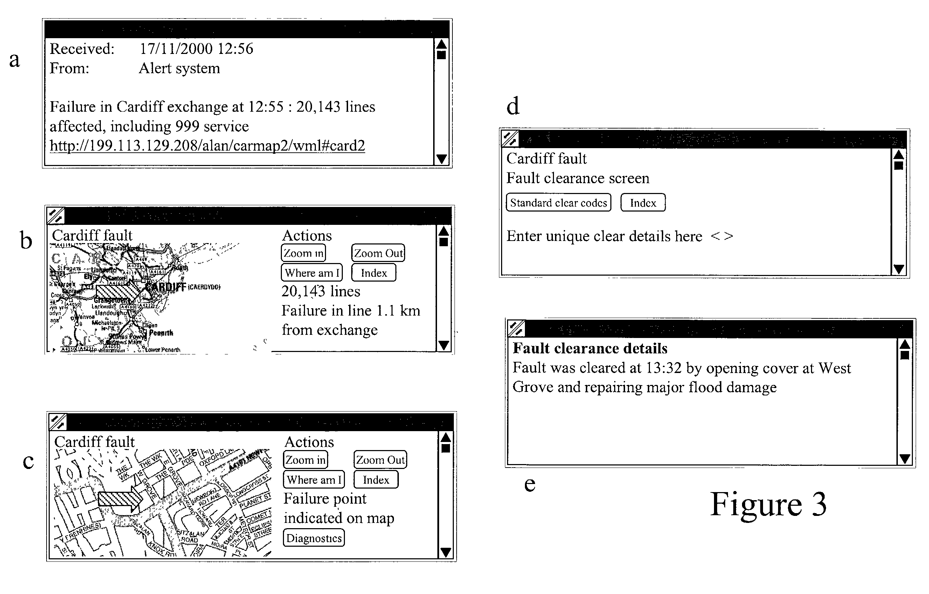

The fault alert is transmitted to the task allocation processor 12 to generate a "task" to be performed, the details of which are entered into the task allocation program (step 21). (Although illustrated here as automated, the fault reporting and / or data entry may require human input. The task allocation system 12 selects a technician to perform the task and then instructs the data handling system 13 to process the allocation. The data handling system 13 transmits a text message (SMS) to the technician's mobile handset 15 (step 21). This text message is shown in Figure 3a, and indicates the nature of the task to be carried out (in this case attention to a trunk line failure). The text message also includes an Internet address.

The data handling system 13 also generates task-specific data and transmits it to the server 16 corresponding to the Internet address in the text message (step 22). The server retrieves any data required by this instruction from other servers (step 23) and stores it ready for access by the user.

The user is alerted to the arrival of the text message by the call alert tone on his handset 15 and reads the SMS message. He then accesses the server 16 using the Internet address (URL) (step 24), causing the handset to log onto the WAP server 16. In the preferred arrangement, the user has a handset of the kind which recognises internet addresses (URL's) in SMS text and generates a "hyperlink", allowing the user to simply "click" on the address displayed using a cursor, touch sensitive screen or the like. An example is the Ericsson R380S. If the handset does not have this capability the address may be entered manually.

The network address may be protected by a "firewall" system to prevent unauthorised access, in which case an access control system may be used such as those disclosed in European patent applications 00300337.3 or 00310674.7 , filed by the present applicant on 18^{th} January 2000 and 1^{st} December 2000 respectively, which provide password control to the database.

The WAP server 16 returns from the store 162 details of the task to be performed, (step 25) in particular a map of the general area in which the fault is located (Figure 3b), previously accessed from the map data server 17. Text giving more details of the fault, and links to other options are also displayed.

The server 16 determines the geographical location of the line at the distance where the fault has been identified, and generates a more detailed view of the fault location (Figure 3c), accessible using a "zoom" link from the initial page (step 26). Other links may include a user position-finding server allowing the user to identify his current location (measured for instance with reference to the base stations of the cellular network as disclosed for example in International Patent Application WO96/35306), possibly linked to a route finding server to identify the best way of getting to the fault.

The user can now travel to the fault location (step 27). He can then access other information (steps 281, 282), using further links from the fault location page (Figure 3c) such as information on the type of equipment present at the fault location, and links to maintenance instructions for that equipment, and may also perform remote diagnostics on the network, by accessing a diagnostics server which can generate test signals in the network, under the control of the technician through his handset. The user can therefore initiate remotely the transmission of test signals from the exchange to the network point that he is testing, or between two remote locations such as the two termination points of the line under test, to carry out diagnostic functions on the equipment.

When the technician has cleared the fault he accesses a server associated with the task management system (step 283), thereby causing a task clearance screen (Figure 3d) to be displayed, and enters the data required to report that the task has been completed (step 29) (Figure 3e).

## Claims

1. An information handling system comprising
text generation means for generation of an application server accession text comprising a server accession command for accessing an application server
transmission means for transmission of a text message to a receiving unit, the text message including the application server accession text

2. An information handling system according to claim 1, further comprising application server control means for preparing the application server such that it will respond to the server accession command in a predetermined manner.

3. An information handling system according to claim 2, wherein the application server control means comprises data generation means for generating data for the use of the addressee of the text message, and storage means for storing said data at an address accessible by the server accession command.

4. An information handling system according to claim 1, claim 2 or claim 3, further comprising an allocation processor having means to identify a requirement for a server accession to be made, means to select a receiving unit for making the server accession, and means to control the transmission means to transmit the text message containing the server accession command to the selected receiving unit.

5. An information handling system according to claim 4, wherein the allocation processor is a task allocation system arranged to select a resource to perform a reported task for which a task-related accession command is generated.

6. A method of handling information comprising the steps of
generating an application server accession text comprising a server accession command for accessing an application server
transmitting a text message to a receiving unit, the text message including the application server accession text.

7. A method according to claim 6, comprising the further step of transmitting instructions to the application server, such that it will respond to the server accession command in a predetermined manner

8. A method according to claim 6 or claim 7, further comprising the steps of:
identifying a requirement for a server accession to be made,
selecting a receiving unit for making the server accession, and
transmitting the text message containing the server accession command to the selected receiving unit.

9. A method according to claim 8, being a task allocation process, wherein a resource is selected to perform a task,
an accession command is generated for the said task,
the accession command is transmitted to the selected resource.

10. A method according to claim 6, 7, 8 or 9, wherein the server accession command is an address in a computer network.

11. A method according to claim 6, 7, 8, 9, or 10 comprising the further step of generating data for the use of the addressee of the text message, and storing said data at the address accessible by the server accession command.

12. A method according to claim 6, 7, 8, 9, 10 or 11 wherein the server accession command provides access to an interactive system

13. A method according to claim 12, wherein the interactive system is a route finding processor.

14. A method according to claim 12, wherein the interactive system is a diagnostic processor to control a distributed system to allow diagnostic tests of the system to be performed.

15. A data carrier containing computer code for loading into a computer for the performance of the method of any of claims 6 to 14.

16. A general-purpose computer programmed to perform the method of any of claims 6 to 14.
